# EUROPEAN PATENT APPLICATION

(11) **EP 2 793 490 A1**
(43) Date of publication of application: **22.10.2014**
(21) Application number: 13002014.2
(22) Date of filing: 17.04.2013
(51) Int. Cl.: H04W 4/04, H04W 4/20

(54) **Communication framework for adapting comfort at a place where a plurality of persons is residing**

(71) Applicant: ABB AG, 68309 Mannheim (DE)
(72) Inventor: Nädele, Martin, CH-8050 Zürich (CH)

(57) **Abstract**

The invention relates to a communication framework (1) for adapting comfort at a place where a plurality of persons is residing, whereby said framework (1) comprises a comfort management system (2) and a plurality of mobile communication devices (3, 3', 3", 3"'), whereby each person is using one of said mobile communication devices (3, 3', 3", 3"'), whereby each mobile communication device (3,3', 3", 3"') has the ability to communicate with the comfort management system (2), whereby each mobile communication device (3, 3', 3", 3"') is configured to run a mobile-comfort-feedback-app (4, 4', 4", 4"'), whereby said mobile-comfort-feedback app (4, 4', 4", 4"') is configured for a l communication between the mobile communication device and the comfort management system (2).

## Description

The invention relates to a communication framework for adapting comfort at a place where a plurality of persons is residing, whereby said framework comprises a comfort management system.

Such a place can be an event, a building, a conference hall, or something the like. Events or building with many residing persons or many visitors can be for example conferences, open space offices, concerts, tradefairs, railway trains, sports events, waiting areas, or the like. The individual comfort feeling of each visitor or each residing person is determined by a range of relevant environmental comfort parameters. Such environmental comfort parameters can be one or more of temperature, lighting, humidity, draught, volume, etc. In a building or in a conference hall with many visitors, or at another place with many residing persons, environmental comfort parameters are often not at the optimum level for individual or all visitors. In certain countries, event areas are kept very cold, because it is anticipated that visitors feel discomfort with higher temperatures, but building operators in such regions often do not have clear data about that. As a consequence, a high energy consumption occurs at these events which is not necessarily required at such a high level. Reason is that facility management often sets environmental parameters according to experience and according to a very limited number of individual requests. As a consequence, often the comfort feeling and comfort expectation of the majority of the visitors to a building or of the participants at an event are not met.

It is the objective of the present invention to establish a novel way of communicating between the comfort management system and building visitors during events on issues of building comfort, in order to increase the individual comfort level of building or event visitors.

According to the invention, the objective is achieved by a communication framework for adapting comfort at a place where a plurality of persons is residing, whereby said framework comprises a comfort management system and a plurality of mobile communication devices , whereby each person is using one of said mobile communication devices, whereby each mobile communication device has the ability to communicate with the comfort management system, whereby each mobile communication device is configured to run a mobile-comfort-feedback-app, whereby said mobile-comfort-feedback app is configured for a communication between the mobile communication device and the comfort management system.

According to an advantageous aspect of the invention, the place where the plurality of persons is residing is a building with a building automation system or a part of a building with a building automation system, whereby the comfort management system is a part of the building automation system. The part of the building may be a conference hall or an exhibition area or the like.

According to an advantageous aspect of the invention, said mobile-comfort-feedback app is configured for a bidirectional communication between the mobile communication device and the comfort management system,

The solution according to the invention has the advantage that visitors or persons residing in the building or the respective part of the building can give feedback to the facility management, respectively to the building automation system, respectively to the comfort management system, to request changes to increase their comfort level.

A mobile application, or mobile app, is a application software designed to run on a mobile device such as a smartphone, a tablet computer or another mobile device. Mobile apps are usually available through application distribution platforms.

In the context of the communication framework according to the present invention, a mobile-comfort-feedback-app refers to an app that allows a user to communicate in a bidirectional way with the comfort management system, to give continuous and real-time feedback to the comfort management system about his comfort level with respect to multiple relevant environmental comfort parameters, and to receive certain information from the comfort management system and display this information in an appropriate way for the user to be able to recognize it.

According to an advantageous aspect of the invention the building automation system is configured to create different zones in the building with different, zone-specific, comfort parameter settings. Such zones can be for example certain areas within a big conference hall, where each area can be individually heated, ventilated, humidified, or enlightened or shadowed. The building automation system would show and highlight such zones on a map of the building and display it to the visitor via the mobile-comfort-feedback-app. In other words, according to an advantageous aspect of the invention the building automation system is configured to communicate the position of the different zones in the building with the respective different, zone-specific, comfort parameter settings to the mobile-comfort-feedback apps for displaying them to the persons using the respective mobile communication devices, so that the persons can move into such a zone where the displayed comfort parameter settings match their comfort requirements. A visitor who likes it warm can chose to move to an indicated zone with higher temperature, another visitor, who feels hot, can select a zone with lower temperature and move there, and so on. Advantage is that the visitor can move to a zone in agreement with his individual comfort requirements.

According to an advantageous aspect of the invention the mobile-comfort-feedbark app is configured communicate comfort-feedback-information about one persons' comfort level with respect to at least one relevant environmental comfort parameter to the comfort management system, whereby the comfort management system is configured to make adjustments to the at least one relevant environmental comfort parameter in response to the aggregated comfort-feedback-information from said plurality of persons. The at least one environmental comfort parameter can be one of temperature and/or lighting and/or humidity and/or draught.

According to an advantageous aspect of the invention the mobile-comfort-feedback app is configured to communicate continuously and real time the comfort-feedback-information about one persons' comfort level.

According to an advantageous aspect of the invention the mobile-comfort-feedback app is configured to communicate position information indicating the actual position of the mobile communication devices attached to the comfort-feedback-information to the comfort management system. In other words, the mobile-comfort-feedback app according to the invention uses indoor localization schemes to attach position information to comfort feedback.

According to an advantageous aspect of the invention the building automation system is configured to use the position information as access control information to allow usage of the comfort feedback information to authorized parties. In other words, the location information is used as access control information to allow anonymous usage to authorized parties, This may be even everybody within the building.

According to an advantageous aspect of the invention the building automation system is configured to comprise a supervisory control and data acquisition system to visualize the received comfort feedback information. Such systems are known also as SCADA-systems. Visualizing the received feedback allows the facility management personnel to make requested changes. Such requested changes would be for example changes to the comfort parameter settings in different zones, for example cooling down one zone, heating up another zone, increasing lighting in two other zones or the like.

According to an advantageous aspect of the invention the building automation system is configured to automatically adjust the at least one relevant environmental comfort parameter in response to the aggregated comfort-feedback-information from said plurality of persons.

According to an advantageous aspect of the invention the building automation system is configured to record and collect the aggregated comfort-feedback-information communicated by the persons in the building over a certain period of time. Such a period of time may be the duration of an event. Advantage is that this would enable a comfort performance based compensation to the facility operator.

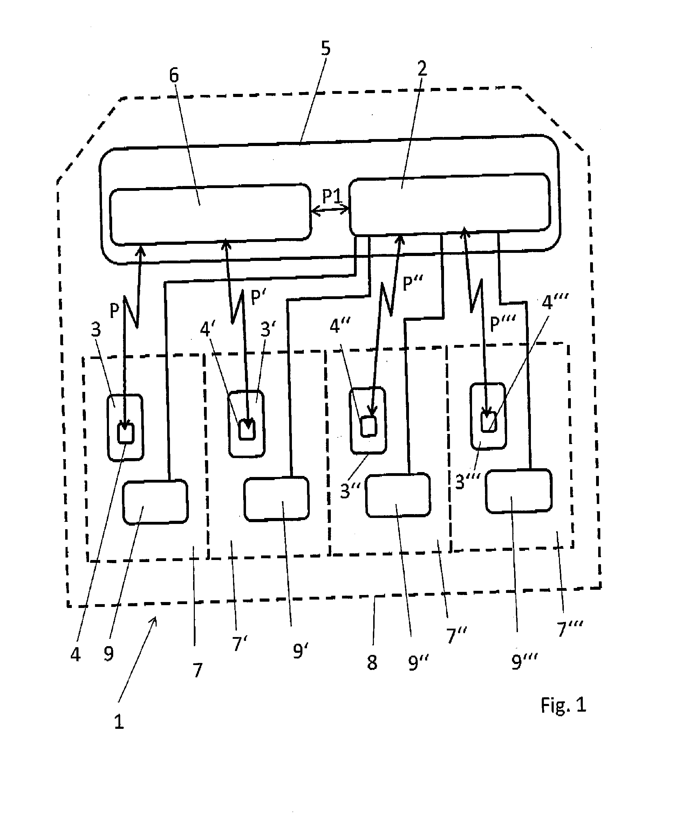

The invention will be described in greater detail by description of an embodiment with reference to the accompanying drawing, wherein
Fig. 1 shows schematically a communication framework according to the invention.
Figure 1 shows schematically a communication framework 1 for adapting comfort at a place where a plurality of persons is residing. In the embodiment shown in figure 1
this place is a building 8, which may be an exhibition hall or a conference building or the like.

The building 8 has a building automation system 5. Building automation systems in principle are known. A part of the building automation system is a comfort management system 2. The comfort management system 2 is a kind of sub-system to the building management system 5. The comfort management system 2 controls and manages comfort relevant environmental parameters within the building.

For this purpose, there are a number of comfort relevant devices 9, 9', 9", 9'" installed in the building 8. Examples for such a comfort relevant device are heaters for increasing temperature, coolers for lowering temperatures, ventilator for creating an air stream, air condition apparatus for adjusting the air humidity and temperature, jalousie for darkening, dimmers for adjusting the brightness of light sources, automatic window opening and closing devices for getting fresh air, or the like. Respectively, the comfort relevant environmental parameters that can be adjusted by the comfort management system 2 comprise temperature, humidity, lighting, draught, etc.

The building 8 is segmented in a number of different zones 7,7', 7", 7"', here as an example only there are four zones shown, but it might be less or more. Accordingly, the building automation system 5 is configured to create different zones 7,7', 7", 7"' in the building with different, zone-specific, comfort parameter settings. In the figure there is shown one comfort relevant device 9,9', 9", 9"' in each zone 7, 7', 7", 7", which is for example only. As mentioned already, the comfort relevant device 9, 9', 9", 9'" is a kind of comfort relevant sub system to adjust the comfort parameters in each of the zones 7, 7', 7", 7"'. So each of the comfort relevant device 9, 9', 9", 9"' shown in the figure may be regarded as an entity of various sub-devices, so that more than one comfort parameter is adjustable with each of the comfort relevant device 9, 9', 9", 9"'. For example, in zone 7 the device 9 may be configured to adjust temperature and humidity, whereas in zone 7"' the device 9'" is configured to adjust temperature and lighting, and in zone 7' the device 9' is configured to adjust temperature and ventilation.

The framework 1 further comprises a plurality of mobile communication devices 3, 3', 3", 3"'. Each person or each visitor to the building 8 is using one of said mobile communication devices 3, 3', 3", 3"', whereby each mobile communication device 3, 3', 3", 3"' has the ability to communicate with the comfort management system 2. The mobile communication devices 3, 3', 3", 3"' can be smartphones or tablet computers or the like.

Each mobile communication device 3, 3', 3", 3"' is configured to run a mobile-comfort-feedback-app 4, 4', 4", 4"', whereby said mobile-comfort-feedback app 4, 4', 4", 4"' is configured for a bidirectional communication between the mobile communication device and the comfort management system 2.

In the schematic representation of the figure there is shown one mobile communication device 3, 3', 3", 3"' in each of the zones 7, 7', 7", 7"', but this is for example only. It is understood that this only represents one exemplary embodiment. In reality of course there may be many persons with many mobile communication devices in each of the zones.

Each of the mobile-comfort-feedback apps 4, 4', 4", 4"' is configured to communicate comfort-feedback-information about one persons' comfort level with respect to at least one relevant environmental comfort parameter to the comfort management system 2, whereby the comfort management system 2 is configured to make adjustments to the at least one relevant environmental comfort parameter in response to the aggregated comfort-feedback-information from said plurality of persons. The bidirectional communication paths are schematically indicated by the arrows P, P', P", P"'. Communication can be via WLAN, WiFi, Bluetooth or any other wireless communication technique that is in principle known.

Each of the mobile-comfort-feedback apps 4, 4', 4", 4"' is configured to communicate continuously and real time the comfort-feedback-information about one persons' comfort level.

Each of the mobile-comfort-feedback apps 4, 4', 4", 4"' is configured to communicate position information indicating the actual position of the mobile communication devices 3, 3', 3", 3"')attached to the comfort-feedback-information to the comfort management system 2-Position information may result from the use of an indoor localization scheme that is part of the building automation system 5. It may be based on GPS data or other localization information systems that are in principle known.

The building automation system 5 is configured to use the position information as access control information to allow usage of the comfort feedback information to authorized parties.

The building automation system 5 is configured to comprise a supervisory control and data acquisition system 6 to visualize the received comfort feedback information. Such a system is in principle known as a SCADA system, for example also in Industrial process control. Visualizing the received feedback allows the facility management personnel to make requested changes. Such requested changes would be for example changes to the comfort parameter settings in different zones, for example cooling down one zone, heating up another zone, increasing lighting in two other zones or the like.

The bidirectional communication between the mobile communication devices 3, 3', 3", 3'" and the comfort management system 2 can be indirectly via the SCADA system 6, which by itself is in a bidirectional manner communicating with the comfort management system 2, see arrow P1. Or the communication between the mobile communication devices 3, 3', 3", 3"' and the comfort management system 2 can be a direct one, see arrows P", P"'.

The building automation system 5 through its comfort management system 2 is configured to automatically adjust the at least one relevant environmental comfort parameter in the at least one comfort relevant device 9, 9', 9", 9"' in response to the aggregated comfort-feedback-information from said plurality of persons. The communication and control interaction line between the comfort management system 2 and the comfort relevant devices 9, 9', 9", 9"' is indicated in the figure by lines L, L', L", L"'. In principle each known type of communication scheme can be used, such as a building automation bus system like the European Installation Bus EIB based on the KNX standard, which is in principle known.

In addition, the building automation system 5 is configured to communicate the position of the different zones 7, 7', 7", 7"' in the building with the respective different, zone-specific, comfort parameter settings to the mobile-comfort-feedback apps 4, 4', 4". 4"' for displaying them to the persons using the respective mobile communication devices 3, 3', 3", 3"', so that the persons can move into such a zone where the displayed comfort parameter settings match their comfort requirements. This is a very simple way of increasing the visitors comfort level, Instead of automatically adjusting in a technical manner the comfort parameters in the zone where the visitor just resides, the app shows him where there is a zone where he would feel better, and to guide him there. So once arrived in the new zone, his comfort level will automatically increase.

The building automation system 5 may in addition be configured to record and collect the aggregated comfort-feedback-information communicated by the persons in the building over a certain period of time. Such a period of time may be the duration of an event. Advantage is that this would enable a comfort performance based compensation to the facility operator.

### Reference List

| | |
|---|---|
| 1 | communication framework |
| 2 | comfort management system |
| 3 | mobile communication device |
| 3' | mobile communication device |
| 3" | mobile communication device |
| 3"' | mobile communication device |
| 4 | mobile comfort feedback app |
| 4' | mobile comfort feedback app |
| 4" | mobile comfort feedback app |
| 4'" | mobile comfort feedback app |
| 5 | building automation system |
| 6 | supervisory control and data acquisition system |
| 7 | zone |
| 7' | zone |
| 7" | zone |
| 7"' | zone |
| 8 | building |
| 9 | comfort relevant device |
| 9' | comfort relevant device |
| 9" | comfort relevant device |
| 9'" | comfort relevant device |

## Claims

1. Communication framework (1) for adapting comfort at a place where a plurality of persons is residing, whereby said framework (1) comprises a comfort management system (2) and a plurality of mobile communication devices (3, 3', 3", 3"'), whereby each person is using one of said mobile communication devices (3, 3', 3", 3"'), whereby each mobile communication device (3, 3', 3", 3"') has the ability to communicate with the comfort management system (2), whereby each mobile communication device (3, 3', 3", 3"') is configured to run a mobile-comfort-feedback-app (4, 4', 4", 4"'), whereby said mobile-comfort-feedback app (4,4',4",4"') is configured for a communication between the mobile communication device and the comfort management system (2).

2. Communication framework (1) according to claim 1, whereby the place where a plurality of persons is residing is a building (8) with a building automation system (5) or a part of a building with a building automation system (5), and whereby the comfort management system (2) is a part of the building automation system (5).

3. Communication framework (1) according to claim 1, whereby the mobile-comfort-feedback app (4, 4', 4", 4"') is configured for a bidirectional communication between the mobile communication device and the comfort management system (2).

4. Communication framework (1) according to claim 3, whereby the building automation system (5) is configured to create different zones (7,7', 7", 7"') in the building with different, zone-specific, comfort parameter settings.

5. Communication framework (1) according to claim 2, whereby the mobile-comfort-feedback app (4,4', 4", 4"') is configured communicate comfort-feedback-information about one person's comfort level with respect to at least one relevant end vironmental comfort parameter to the comfort management system (2), whereby the comfort management system (2) is configured to make adjustments to the at least one relevant environmental comfort parameter in response to the aggregated comfort-feedback-information from said plurality of persons.

6. Communication framework (1) according to claim 5, whereby the at least one environmental comfort parameter is one of temperature and/or lighting and/or humidity and/or draught.

7. Communication framework (1) according to claim 5, whereby the mobile-comfort-feedback app (4, 4', 4", 4"') is configured to communicate continuously and real time the comfort-feedback-information about one person's comfort level.

8. Communication framework (1) according to claim 5, whereby the mobile-comfort-feedback app (4, 4', 4", 4"') is configured to communicate position information indicating the actual position of the mobile communication devices (3, 3', 3", 3"') attached to the comfort-feedback-information to the comfort management system (2).

9. Communication framework (1) according to claim 8, whereby the building automation system (5) is configured to use the position information as access control information to allow usage of the comfort feedback information to authorized parties.

10. Communication framework (1) according to claim 5, whereby the building automation system (5) is configured to comprise a supervisory control and data acquisition system (6) to visualize the received comfort feedback information.

11. Communication framework (1) according to claim 5, whereby the building automation system (5) is configured to automatically adjust the at least one relevant environmental comfort parameter in response to the aggregated comfort-feedback-information from said plurality of persons.

12. Communication framework (1) according to claim 4, whereby the building automation system (5) is configured to communicate the position of the different zones (7, 7', 7", 7"') ) in the building with the respective different, zone-specific, comfort parameter settings to the mobile-comfort-feedback apps (4, 4', 4", 4"') for displaying them to the persons using the respective mobile communication devices (3, 3', 3", 3"'), so that the persons can move into such a zone where the displayed comfort parameter settings match their comfort requirements.

13. Communication framework (1) according to claim 5, whereby the building automation system (5) is configured to record and collect the aggregated comfort-feedback-information communicated by the persons in the building over a certain period of time.
